# EUROPEAN PATENT APPLICATION

(11) **EP 2 355 500 A1**
(43) Date of publication of application: **10.08.2011**
(21) Application number: 09306236.2
(22) Date of filing: 15.12.2009
(51) Int. Cl.: H04N 7/14, H04N 7/15, G06T 5/00

(54) **Method and system for conducting a video conference with a consistent viewing angle**

(71) Applicant: Alcatel Lucent, 75008 Paris (FR)
(72) Inventor: van Broeck, Sigurd, 2980 Zoersel (BE); van den Broeck, Marc, 2860 Sint-Katelijne Waver (BE); Lou, Zhe, 2000 Antwerpen (BE)
(74) Representative: D'Halleweyn, Nele Veerle Trees Gertrudis

(57) **Abstract**

The invention provides a method and system for conducting a video conference between a user and a number of remote correspondents, which comprises displaying visualizations of the correspondents, embedded in a virtual reality scenery. Video images of the user and the correspondents are selected and/or processed so as to provide viewing angle consistency between the respective virtualized visualizations across the different sites, making the virtual reality scenery a true shared spatial context for the conference participants. The invention improves the sense of presence and provides better opportunities for non-verbal communication.

## Description

### Field of Invention

The present invention relates to the field of video conferencing methods and systems.

### Background

In the field of video conferencing systems, it is known to provide certain features that aim at improving the illusion of actually being in the same room with the other participants of the video conference. Such features include displaying real-size images of the other participants, and using uniform backgrounds, tables, and attributes across the various conferencing sites.

In the field of virtual worlds, it is known to provide a virtual visual environment in which multiple participants can interact with each other under the form of avatars, which are computer generated and animated characters rendered on a computer display.

### Summary of the Invention

Embodiments of the present invention provide a video conference with an improved sense of telepresence, by creating a virtual, shared spatial context for the physically present participant as well as the remote correspondents, in which all participants can interact in a spatially coherent manner while exchanging video streams of their actual physical appearance.

It will be understood that the term video conference is meant to include any interaction between two or more parties who are not physically located at the same site, and who interact *inter alia* through the exchange of real-time video images, regardless of whether this interaction is primarily intended for conducting business, or for recreational purposes.

According to an aspect of the present invention, there is provided a method for conducting a video conference between a user at a user site and a number of correspondents, comprising generating a visualization feed for at least one target correspondent selected from said number of correspondents, wherein each visualization feed comprises information permitting a visualization of said user to be rendered under a viewing angle that is consistent with an angle under which a virtual location, at which a visualization of the respective target correspondent is embedded in a virtual reality scenery, may be viewed at said user site, said angle being determined in reference to a portion of said virtual reality scenery displayed at said user site.

In an embodiment of the method of the present invention, each visualization feed comprises a video stream depicting said user under said viewing angle pertaining to the respective target correspondent. Such a video stream may be obtained by viewpoint interpolation. In another embodiment of the method of the present invention, each visualization feed comprises a three-dimensional video model of said user.

The term three-dimensional video model is understood herein to refer to any information stream that comprises information pertaining to the spatial disposition of the object in question, in particular any information that allows derivation of a 3D model with texture. Such a stream may be in the form of a 2D image with additional depth information mapped to pixels or objects comprised in the 2D image.

In an embodiment, the method of the present invention further comprises transmitting each visualization feed to the respective target correspondent, said visualization feed being merged into said virtual reality scenery at a virtual user location.

In an embodiment, the method of the present invention further comprises selecting only those correspondents whose displayed portion of the virtual reality scenery includes the virtual user location.

According to another aspect of the present invention, there is provided a method for conducting a video conference between a user at a user site and a number of correspondents, comprising displaying at the user site a portion of a virtual reality scenery in which at least one visualization of a correspondent at a correspondent site is embedded at a virtual location, wherein the visualization derives from a visualization feed generated from a number of video streams captured at the correspondent site, such that the visualization depicts the correspondent under a viewing angle that is consistent with an angle under which a virtual user location, at which a visualization of the user is embedded in the virtual reality scenery, may be viewed at the correspondent site.

In an embodiment, the method of the present invention further comprises changing the displayed portion of the virtual reality scenery from time to time.

In an embodiment of the method of the present invention, the changing occurs in response to an action by the user. In another embodiment, the changing occurs in response to an action by at least one of the number of correspondents.

In an embodiment of the method of the present invention, the displaying comprises rendering the visualization by means of a three-dimensional displaying means.

According to yet another aspect of the present invention, there is provided a system for conducting a video conference between a user and a number of correspondents, comprising a display set for displaying a visualization of at least one of the number of correspondents, a visualization of each correspondent being embedded at a virtual location in a virtual reality scenery, a number of video cameras, stream processing means operationally coupled to said video cameras, and target selection means for selecting target correspondents from among the number of correspondents, wherein the stream processing means is adapted to generate a visualization feed for viewing by the target correspondents, each visualization feed comprising information permitting a visualization of the user to be rendered under a viewing angle that is consistent with the angle of the virtual location at which the visualization of the respective target correspondent is embedded in reference to a portion of the virtual reality scenery that is displayed on the display set. The visualization feed may be a two-dimensional video feed, preferably obtained by viewpoint interpolation. The visualization feed may alternatively be a three-dimensional video model.

In an embodiment, the system of the present invention further comprises a virtual camera controller, wherein the display set is adapted to change a displayed part of the virtual reality scenery in response to a signal from the virtual camera controller. In a particular embodiment, the system of the present invention further comprises a user interface, wherein the virtual camera controller is controlled by the user interface. In another particular embodiment, the system of the present invention further comprises an input analyzer adapted to receive and analyze video or sound data from the number of correspondents to associate relative viewing preferences with a plurality of different parts of the virtual reality scenery, wherein the virtual camera controller is controlled by the input analyzer to display a part of the virtual reality scenery that is associated with a maximal relative viewing preference.

In an embodiment of the system of the present invention, the target selection means is adapted to receive a signal indicating whether respective correspondents are displaying a visualization of the user, and to select only correspondents that are displaying a visualization of the user according to said signal.

### Brief Description of the Figures

Some embodiments of systems and methods in accordance with embodiments of the present invention are now described, by way of example only, and with reference to the accompanying drawings, in which:
Figure 1 illustrates an embodiment of the system according to the invention;
Figure 2 illustrates another embodiment of the system according to the invention;
Figure 3 illustrates another embodiment of the system according to the invention;
Figure 4 is a block diagram of an embodiment of the system according to the invention;
Figure 5 is a flow diagram of an embodiment of the method according to the invention.

Throughout the figures, like numerals are used to refer to like elements.

### Description of Embodiments

According to a general embodiment, the present invention provides a method for conducting a video conference between a user at a user site and a number of correspondents at correspondent sites, which method comprises displaying a visualization of at least one of said number of correspondents at said user site, said visualization being embedded in a virtual reality scenery at virtual location; capturing video images of said user; selecting target correspondents from among said number of correspondents; using said captured video images to generate a visualization feed for each of said target correspondents, wherein each visualization feed comprises information permitting a visualization of said user to be rendered under a viewing angle that is consistent with the angle of said virtual location in reference to a displayed portion of said virtual reality scenery; and transmitting said visualization feed to said target correspondents, said visualization feed being merged into a virtual reality scenery at a virtual user location.

A known method to create the illusion that remote participants to a video conference are in the same room, is to harmonize the background of the images captured at the different sites, in particular by using a homogeneous, featureless environment, such as a background wall or a panel painted in a single color, and a regular, single-color conference table that virtually melts into the visualization of its remote counterparts. This known method has the problem that it does not create a meaningful shared spatial context for the participants.

Embodiments of the present invention are based on the insight that a meaningful spatial context can be created for the participants by establishing viewing angle consistency, and by fusing the captured images of the participants into a shared virtual environment for visualization. These embodiments have the effect of augmenting the telepresence illusion by creating a spatial context, shared between the physically present participant and the visualized remote participants, which context contributes *inter alia* to the potential for non-verbal communication between the participants.

In a point-to-point video conference, viewing angle consistency can be achieved by aligning the camera with the participant-screen axis at each site. In this way a common virtual "stage line" is defined, and each participant will have an accurate sense of whether the other party is looking at him or in a different direction. However, viewing directions other than looking straight at the other participant do not have a common context between the participants. This drawback reduces the value of non-verbal communication between the participants of a point-to-point video conference.

A shared viewing angle context may be present in multi-party video conferences, i.e. video conferences with more than two participating sites, where the visualization of the additional participants provides common reference points. In order to make this context a truly shared context, viewing angle consistency must be maintained in this situation.

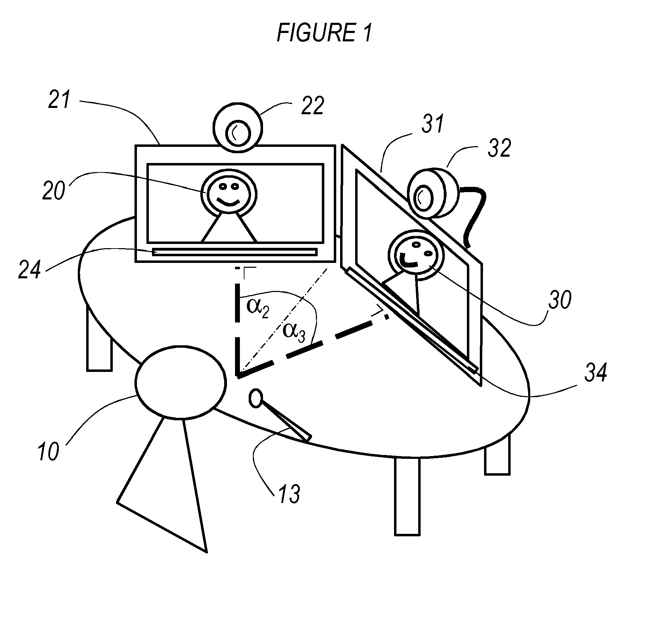

Figure 1 illustrates the generalized concept of viewing angle consistency in a multiparty video conferencing system. Without loss of generality, a teleconference with three participants **10, 20, 30** is schematically represented; the skilled person will understand that the principles can be applied without difficulty to teleconferences with any number of participants. Without loss of generality, participant **10** is shown as the physically present participant at the depicted site. The skilled person will understand from the following description that an equivalent set-up shall be assumed to be present at the respective sites where participant **20** and participant **30** are physically present.

To facilitate the description, a polar coordinate system is introduced, of which physically present participant **10** is the origin, and the direction perpendicular to the front side of the participant's body is chosen as the reference axis corresponding to an angle of 0°. This reference axis is shown as a dash-dotted line.

In the depicted geometry, different images of the physically present participant **10** are captured by camera **22** and camera **32**, at angles α₂ and α₃ respectively. These images correspond to the images that would be perceived by a hypothetical participant that would be present at the same site, at the exact location where camera **22** and camera **32** are positioned. The respective images are transmitted to the remote sites of participants **20** and **30**, for display on an appropriate screen. In an exemplary lay-out, angles α₂ and α₃ may be taken to be 30° each, resulting in an even distribution of the three participants around the virtual conference table along an equilateral triangle.

An equivalent coordinate system to the one discussed above, may be imposed at the remote site where participant **20** is present. The screen depicting participant **10** is positioned at the origin, perpendicular to the reference axis. A screen depicting participant **30** is positioned at the same polar coordinates as the screen depicting participant **30** at the site of participant **10.** Participant **20** positions himself at the same polar coordinates as the screen depicting him at the site of participant **10.**

An equivalent coordinate system to the one discussed above, may further be imposed at the remote site where participant **30** is present. The screen depicting participant **10** is positioned at the origin, perpendicular to the reference axis. A screen depicting participant **20** is positioned at the same polar coordinates as the screen depicting participant **20** at the site of participant **10**. Participant **30** positions herself at the same polar coordinates as the screen depicting her at the site of participant **10.**

As a result, the relative spatial relationships between the various participants, whether they are the physically present participant or the displayed representations of the remote participants, is identical at each of the sites. Additionally, the participants will see each others' representations under the same angle as they would see the respective participants if they were physically present at the same site and looking in the direction in which they are looking.

To improve the telepresence experience, it is advantageous to provide for adequate directional reproduction of sounds captured at the different sites participating in the video conference. In an embodiment of the system according to the present invention, the sounds at the site of participant **10** are captured by a microphone **13,** and remote sites are likewise equipped with a microphone (not shown). For each remote site, there is a speaker **24, 34** provided at the local site, to reproduce the captured sounds. Speakers **24, 34** are preferably positioned in such a way that the reproduced sounds are emitted from the same direction as the respective remote participant's visualization. Alternatively, a single surround sound system (not shown) such as a 6-speaker set according to the Dolby surround system, or a sound bar, is present at the site of participant **10** to reproduce sounds from the various remote sites, whereby an appropriate directional characteristic is assigned to each sound according to its originating site.

The skilled person will understand that the introduction of the coordinate system is only a means to facilitate the understanding of the underlying concept, which does not define or limit the underlying concepts themselves. In fact, the underlying concept can be summarized by stating that viewing angle consistency can be achieved between any two participants in a video conferencing system by ensuring that the following two conditions are met:
- for each of the two participants, there is provided a camera aimed at that participant from the direction in which the visualization of the other participant is positioned;
- at each site, the visualizations of all remote participants are positioned at the same relative positions from a first reference participant, using the stage line between the first reference participant and a second reference participant as the reference for the determination of the relative positions.

Embodiments of the present invention are based on the insight that the effect of aligning a camera with the stage line between a first participant and the visualization of a second participant may advantageously be achieved by using multiple cameras aimed at the first participant under different angles, and applying viewpoint interpolation techniques to generate an image of the first participant that appears to be captured from the angle under which the visualization of the second participant is displayed to the first participant. Viewpoint interpolation techniques as known in the art allow the synthesis of a photographic or videographic image of a subject as seen from a given target angle, on the basis of photographic or videographic images of the same subject taken from other angles, whereby the other angles preferably surround the target angle.

In a variation of this scheme, the various images of the first participant are used to generate a videographic 3D model of this participant, which model is used to recreate a visualization under the appropriate angle at the site of the second participant.

Accordingly, using this technique, it becomes possible to drop the requirement that the relative positions of the visualizations of the different participants be identical between the different sites. If it is known at which participant's visualization a given participant at a first site is looking, and if it is known where the watched participant is being visualized at a second site, it is possible to use viewpoint interpolation and/or 3D modeling to generate an image of the participant of the first site that, when seen at the second site, appears to be looking at the visualization of the watched participant. Although this method is generally applicable, it is nevertheless advantageous to observe a consistent order between the different participants or their visualizations at the different sites.

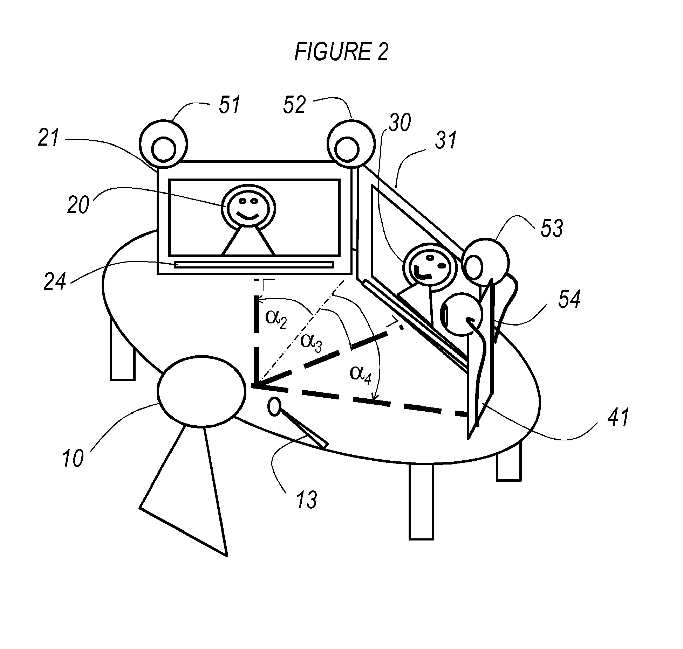

It is particularly advantageous to position the visualizations of the different participants around a conference table such that the various screens span a viewing angle of approximately 90°, as shown in Figure 2. In Figure 2, the set-up of Figure 1 is extended to an additional remote participant **40** (not shown), visualized on an additional screen **41**. The images are captured by cameras **51-54,** and interpolated to generate the correct viewing angles for visualization at the sites of the remote participants, which have an equivalent set-up. In an exemplary lay-out, angle α₄ is equal to 60°, such that a viewing panorama is formed that extends over slightly more than 90°. It will be clear to the skilled person, that the concept may be applied to any number of participants.

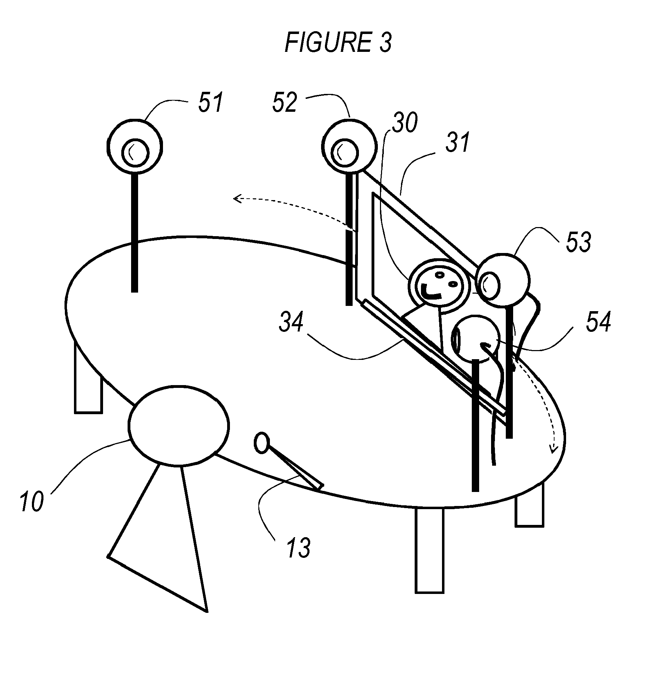

Embodiments of the present invention are based on the additional insight that the technique leading to the embodiment of Figure 2 can be further generalized to a set-up requiring only a single screen. Figure 3 illustrates participant **10** in front of the single screen **31**, illustrated as showing a visualization of remote participant **30**. By the operation of an appropriate control unit **110** (not shown), the image displayed on screen **31** may be switched to a view of another one of the remote participants. Optionally, this switching between participants is displayed as a horizontal panning movement, taking into account the relative positions of the remote participants around the virtual conference table. Optionally, the control unit 110 **may allow zooming in or zooming out with respect to th**e displayed image, whereby it may be possible to display multiple remote participants as though they were physically sitting next to each other around the same virtual conference table. Throughout the described panning actions, the viewing angle of the images that the remote participants receive for displaying participant **10** will be adequately chosen to represent the direction of the participant that is presently being watched by participant **10**, whereby viewpoint interpolation is applied as described above.

The control unit **110** that controls the panning and/or zooming actions may be operated by means of a man-machine interface **120** of the known kind, such as a keyboard, a mouse, a touchpad, a joystick, a scroll wheel, a set of buttons on an infrared remote control, or a wireless motion sensor such as a Wii-mote. The control unit **110** may alternatively be operated by means of body movements, such as hand gestures or head movements, which may be captured by sensors attached to the body of participant **10** (not shown) or by the cameras **51-54**, equipped with adequate motion detection software.

The control unit **110** may alternatively or additionally be operated by an operator who does not participate in the video conference, and effectively acts as a director to determine the viewpoints to be displayed. The control unit **110** may alternatively or additionally operate in an autonomous mode, in which it reacts to any appropriate combination of sound input and image input as acquired at the different sites participating in the video conference to heuristically determine which participant is presently in charge of the conversation and should be on display, thus providing an automated director. Such an automated director may operate by assigning a numerical value to each correspondent, which numerical value represents the calculated degree of activity of that correspondent, based on parameters such as the correspondent's degree of motion and of sound production. This degree of activity may be translated into a viewing preference, for instance by introducing the assumption that the most active correspondent is most preferably viewed, in which case de calculated degree of activity directly represents that correspondent's viewing preference. Alternatively, the autonomous director may be adapted to assign a higher viewing preference to specific forms of activity, such as waving a hand, nodding, or pushing a button provided for the purpose of attracting attention.

According to embodiments of the invention, the shared spatial context between the participants of the video conference is further enhanced by combining the visualizations of the different participants with a common virtual environment. Known virtual environments, known as virtual worlds or metaverses, allow interactions between their visitors through the intermediation of avatars, which are computer-generated visualizations of entities that represent individuals. The avatars may be humanoid, and may be able to display basic functions of body language. A more natural interaction can be provided to the participants by using images of the actual individuals, preferably live video images, for generating the avatar visualizations.

From the above, the skilled person will appreciate that the combination of a virtual environment and viewing angle consistency, as presented by embodiments of the present invention, provides a richer telepresence experience, in which it is possible to discern in real time at which conference participant or at which feature of the virtual environment another participant is looking, and this regardless of whether the other participant "looks" by turning her head or by the operation of a control unit 110 that changes the displayed point of view.

Further embodiments of the present invention are based on the insight that when multiple cameras are aimed at the same participant, as in the embodiments described above, the acquired video information and the 3D model thence derived may be used to generate a stereoscopic representation of the image for display through a three-dimensional visualization aid at a remote site. The three-dimensional visualization aid may comprise 3D goggles, polarized or anaglyphic projection with appropriate glasses, 3D displays, and other known variants.

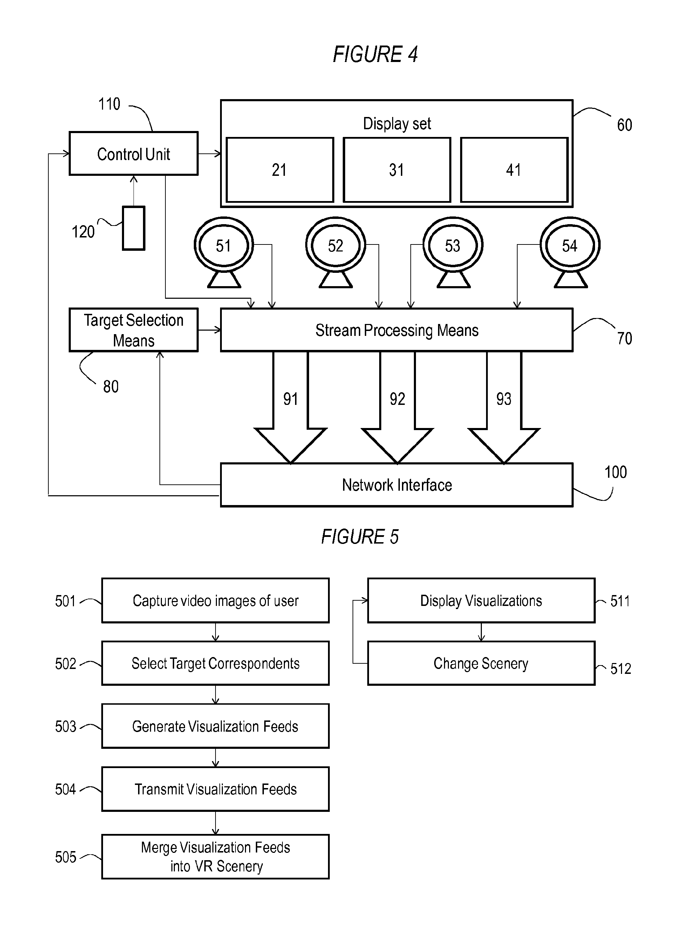

Figure 4 presents a block diagram of an embodiment of the system of present invention. Display set **60** is shown as comprising three screens **21, 31, 41**, consistent with the embodiment of Figure 2. The cameras **51-54** are also chosen to coincide with the cameras depicted in Figure 2. The skilled reader will understand that the number of screens and the number of cameras are only fixed for illustrative purposes, and that they do not limit the scope of the invention. The system may further be equipped with audio output means (not shown), preferably directional audio output means, as described above. These audio output means may be provided as a speaker set built into the display set **60.**

Network interface **100** provides communication between the respective systems of the local user **10** (not shown) and the remote correspondents **10, 20, 30** (not shown), through any of the known communication methods. In particular, network interface **100** would typically comprise the necessary hardware and software to communicate over the public switched telephone network (PSTN) or over the Internet. Hence, the display set **60** is shown to receive the data necessary to generate visualizations of the remote participants via network interface **100.**

The rendering of the visualizations of the remote correspondents **20, 30, 40** is preferably based on 3D object models. This has the advantages of allowing a level of interaction with the (virtual) environment that is not possible with a 2D image, and of providing a basis for light tracing and shadow casting from or onto other 3D objects in the virtual reality scenery, such that a visually consistent virtual scene may be obtained.

The output of cameras **51-54** is fed into a stream processing means **70.** The stream processing means **70** may be implemented as dedicated hardware, or as an adequately programmed processor. In one embodiment, the stream processing means **70** simply selects the most appropriate video stream for each respective remote participant **20, 30, 40** from among the streams supplied by cameras **51-54.** In another embodiment, the stream processing means **70** applies a viewpoint interpolation algorithm to a number of streams supplied by cameras **51-54**, in order to generate the appropriate video stream **91, 92, 93** for each respective remote participant 20, **30, 40.** In yet another embodiment, the stream processing means **70** generates a single videographic 3D model of the images received from the cameras **51-54,** and streams identical copies **91-93** of this model to the remote participants **20, 30, 40**, wherein rendering of the 3D model under the respective appropriate viewing angles takes place at the site of the remote correspondents.

It shall be noted that the single videographic 3D model of the embodiment above, may be a more or less detailed model, in view of which there may be less or more further processing required in order for the rendering to take place. In particular, the videographic 3D model may comprise any information that allows derivation of a 3D object model with texture, such as a two-dimensional image with additionally encoded depth information.

The transformation of a rudimentary videographic 3D model into a model suitable for rendering an image, i.e. the derivation of a full 3D object model, will require additional steps which may be carried out at the sender side, the receiver side, at one or more intermediary entities located in the network, or any combination thereof. The said additional steps preferably include the at least partial removal of incident light and shadow artifacts that are captured by the video cameras **51-54,** to provide the basis for an appropriately neutral 3D object model onto which textures such as light and shadow effects caused by elements of the virtual world may be added.

The targeted video streams or 3D model streams **91, 92, 93,** generated by the stream processing means **70,** are herein collectively referred to as visualization feeds. The visualization feeds are transmitted to their respective destinations via network interface **100.**

In the case where the visualization feeds comprise 3D model streams, the transmission to the correspondents **20, 30, 40** may also take place by means of a single transmission **91** towards a virtual world server (not shown), whence the further distribution towards the correspondents **20, 30, 40 takes place.**

Optionally, a target selection means 80 may provide a signal to the stream targeting means 70 to indicate for which of the correspondents a visualization feed is required. It is possible that a given correspondent has panned or zoomed out or otherwise transformed her displayed rendering of the shared virtual environment in such a way that the virtual location at which user **10** would be embedded is not visible to her. In that event, there is no need to provide this correspondent with a visualization feed of user **10.** In other cases, all the connected remote correspondents will be displaying a visualization of the user **10,** so each of them must be provided with a visualization feed. The target selection means **80** may be implemented as dedicated hardware, or as an adequately programmed processor. In any case, the target selection means **80** must receive some information about the views on display at the sites of the different correspondents **20, 30, 40.** This information may be received over network interface **100,** as shown. Reciprocally, the system at the site of user **10** could transmit information about the current view on display via network interface **100** (this feature is not shown).

Optionally, a control unit **110** is provided to change the view of the virtual reality that is currently being displayed by display set **60.** The control unit **110** may operate autonomously, or in response to a command from a user interface **120.** Control unit **110** provides a signal to the stream processing means **70** to ensure proper modification of the angle under which the user **10** is rendered at the sites of the target correspondents, in response to a change of the displayed view. This modification is applied to visualization feeds **91-93,** i.e. the targeted video streams or the 3D model as the case may be.

The functions of the various elements shown in the Figures, including any functional blocks labeled as "processors" or "processing means", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

Figure 5 represents a flow diagram of an embodiment of the method according to the invention. Although different steps of the method have been numbered for illustrative purposes, this should not be seen as an indication that these steps are necessarily carried out in the numbered order. Likewise, the arrows between the different depicted steps are illustrative of one embodiment only, and are not intended to limit the scope of the invention.

The raw material for the image streams to be displayed at the correspondents' sites **20, 30, 40**, consists of video images captured **501** at the site of the user **10**. These video images are used to generate **503** visualization feeds, as explained above in the description of the system according to the present invention. Preferably, visualization feeds are only generated or transmitted for the correspondents that need to display the user **10**, hence it is advantageous to select **502** the target correspondents on a regular basis. Optionally, a single visualization feed is transmitted to an intermediary such as a virtual world server, for incorporation into further feeds distributed to correspondents **20, 30, 40** acting as virtual world clients.

Additional steps (not shown) may be carried out to transform the visualization feeds into a full 3D object model, as explained above in the description of the system according to the present invention.

The step of merging the visualization feeds **91, 92, 93** into virtual reality scenery **505** may be carried out after transmitting the feeds **504** to the respective correspondents, which implies that the merging **505** is carried out in a system located somewhere in the network, or at the destination. Alternatively, the step of merging **505** the visualization feeds **91, 92, 93** into virtual reality scenery may be carried out prior to transmitting the streams **504** to the respective correspondents **20, 30, 40,** which implies that the merging **505** takes place at the local site of the user **10**. It is also possible that the merging **505** is carried out in several partial steps at different locations; for instance, by performing avatar completion at the local site of the user **10,** and embedding of the completed avatar into the virtual scenery at a centralized network location.

The parallel step of displaying **511** visualizations of the remote correspondents does not normally interfere with the steps of the transmission path described above.

In an advantageous embodiment the view of the virtual reality scenery may be changed **512** from time to time, under the control of a control unit. In this way, the displayed image may be switched between views of different remote participants. Optionally, this switching between participants is displayed as a horizontal panning movement, taking into account the relative positions of the remote participants in the virtual environment. Optionally, the control unit may allow zooming in or zooming out with respect to the displayed image, whereby it may be possible to display multiple remote participants as though they were physically positioned near each other in the same virtual environment. Throughout the described panning actions, the viewing angle of the targeted video streams generated in step **503**, or alternatively the spatial orientation of the 3D video model generated in step **503,** are adequately adapted to represent the direction of the participant or the feature of the virtual environment that is presently being watched by participant **10.**

The control unit that controls the panning and/or zooming actions may be operated by means of a man-machine interface of the known kind, such as a keyboard, a mouse, a touchpad, a joystick, a scroll wheel, a set of buttons on an infrared remote control, or a wireless motion sensor such as a Wii-mote. The control unit may alternatively be operated by means of body movements, such as hand gestures or head movements, which may be captured by sensors attached to the body of participant **10** or by the cameras **51-54,** equipped with adequate motion detection software.

The control unit may alternatively or additionally be operated by an operator who does not participate in the video conference, and effectively acts as a director to determine the viewpoints to be displayed. The control unit may alternatively or additionally operate in an autonomous mode, in which it reacts to any appropriate combination of sound input and image input as acquired at the different sites participating in the video conference to heuristically determine which participant is presently in charge of the conversation and should be on display, thus providing an automated director.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for conducting a video conference between a user at a user site and a number of correspondents, comprising generating a visualization feed for at least one target correspondent selected from said number of correspondents, wherein each visualization feed comprises information permitting a visualization of said user to be rendered under a viewing angle that is consistent with an angle under which a virtual location, at which a visualization of the respective target correspondent is embedded in a virtual reality scenery, may be viewed at said user site, said angle being determined in reference to a portion of said virtual reality scenery displayed at said user site.

2. The method of claim 1, wherein each visualization feed comprises a video stream depicting said user under said viewing angle as pertaining to the respective target correspondent.

3. The method of claim 1, wherein each visualization feed comprises a three-dimensional video model of said user.

4. The method of any of claims 1-3, further comprising transmitting each visualization feed to the respective target correspondent, said visualization feed being merged into said virtual reality scenery at a virtual user location.

5. The method of claim 4, further comprising selecting only those correspondents whose displayed portion of the virtual reality scenery includes said virtual user location.

6. A method for conducting a video conference between a user at a user site and a number of correspondents, comprising displaying at said user site a portion of a virtual reality scenery in which at least one visualization of a correspondent at a correspondent site is embedded at a virtual location, wherein said at least one visualization derives from a visualization feed generated from a number of video streams captured at said correspondent site, such that said at least one visualization depicts said correspondent under a viewing angle that is consistent with an angle under which a virtual user location, at which a visualization of said user is embedded in said virtual reality scenery, may be viewed at said correspondent site.

7. The method of claim 6, further comprising changing said displayed portion of said virtual reality scenery from time to time.

8. The method of claim 7, wherein said changing occurs in response to an action by said user.

9. The method of claim 8, wherein said changing occurs in response to an action by at least one of said number of correspondents.

10. The method of any of claims 6 to 9, wherein said displaying comprises rendering said visualization by means of a three-dimensional displaying means.

11. System for conducting a video conference between a user and a number of correspondents, said system comprising:
- a display set for displaying a visualization of at least one of said number of correspondents, a visualization of each correspondent being embedded at a virtual location in a virtual reality scenery;
- a number of video cameras;
- stream processing means operationally coupled to said video cameras; and
- target selection means for selecting target correspondents from among said number of correspondents;
wherein said stream processing means is adapted to generate a visualization feed for viewing by said target correspondents, each visualization feed comprising information permitting a visualization of said user to be rendered under a viewing angle that is consistent with the angle of the virtual location at which the visualization of the respective target correspondent is embedded in reference to a portion of said virtual reality scenery that is displayed on said display set.

12. The system of claim 11, further comprising a virtual camera controller, wherein said display set is adapted to change a displayed part of said virtual reality scenery in response to a signal from said virtual camera controller.

13. The system of claim 12, further comprising a user interface, wherein said virtual camera controller is controlled by said user interface.

14. The system of claim 12, further comprising an input analyzer adapted to receive and analyze video or sound data from said number of correspondents to associate relative viewing preferences with a plurality of different parts of said virtual reality scenery, wherein said virtual camera controller is controlled by said input analyzer to display a part of said virtual reality scenery that is associated with a maximal relative viewing preference.

15. The system of any of claims 11 to 14, wherein said target selection means is adapted to receive a signal indicating whether respective correspondents are displaying a visualization of said user, and to select only correspondents that are displaying a visualization of said user according to said signal.
